# EUROPEAN PATENT APPLICATION

(11) **EP 3 113 484 A1**
(43) Date of publication of application: **04.01.2017**
(21) Application number: 14884492.1
(22) Date of filing: 18.12.2014
(51) Int. Cl.: H04N 5/235, G06T 5/50, H04M 1/725

(54) **MOBILE TERMINAL AND PHOTOGRAPHING METHOD THEREFOR**

(30) Priority: 03.03.2014 CN 201410075898
(71) Applicant: Nubia Technology Co., Ltd., Shenzhen, Guangdong 518000 (CN)
(72) Inventor: LI, Qiang, Shenzhen, Guangdong 518000 (CN); WEI, Qiang, Shenzhen, Guangdong 518000 (CN); MIAO, Lei, Shenzhen, Guangdong 518000 (CN)
(74) Representative: Keane, Paul Fachtna
(86) International application number: PCT/CN2014/094154
(87) International publication number: WO 2015/131614

(57) **Abstract**

Provided are a mobile terminal and a photographing method therefor. The mobile terminal includes: an acquisition module, configured to continuously acquire image data; an adjustment module, configured to select image data from the continuously acquired image data and adjust an optical parameter of the selected image data; and a synthesis module, configured to synthesize the adjusted image data. By means of the present disclosure, the problem of incapability of a mobile terminal in achieving a photographing effect of an exposure mode with shutter priority, aperture priority or the like in the conventional art may be solved.

## Description

### TECHNICAL FIELD

The present disclosure relates to mobile terminals and in particular to a mobile terminal and a photographing method therefor.

### BACKGROUND

Quality of a photo is related to exposure, and thus determining a light flux capable of making an image of a Charge Coupled Device (CCD) clear is one of necessary skills of many single lens reflex enthusiasts.

Exposure is related to light passing time and a light passing area, wherein the light passing time is determined by a shutter speed, and the light passing area is determined by an aperture size. In order to obtain correct exposure, a correct combination of shutter and aperture is required. If a shutter is high in speed, a larger aperture is required; and if the shutter is low in speed, a small aperture is required.

There are many exposure modes, such as shutter priority, aperture priority or the like, in an existing professional photographic camera such as a single lens reflex (SLR).

Shutter priority refers to that an automatic photometric system of a machine calculates a value of exposure and then a required aperture size is automatically determined according to a shutter speed selected by a user.

Aperture priority refers to that an automatic photometric system of a machine calculates a value of exposure and then a shutter speed is automatically determined according to an aperture size selected by a user.

The two functions are necessary options for professional photographic machines such as single lens reflexes. However, a mobile device, such as a mobile phone, cannot support the two functions yet. This is because a camera of the mobile device has great limitations compared with a camera of a professional photographic machine. First, its exposure time may not be controlled, that is, a user may not freely select exposure time for photographing a photo. Second, an aperture value of the camera of the mobile device is fixed, and may not be freely adjusted by the user like that of a conventional camera.

### SUMMARY

In view of this, the present disclosure is intended to provide a mobile terminal and a photographing method therefor, which may solve the problem of incapability of a mobile terminal in achieving a photographing effect of an exposure mode with shutter priority, aperture priority or the like in a conventional art.

The technical solutions provided by the present disclosure for solving the technical problem are implemented as follows.

A mobile terminal includes:
an acquisition module, configured to continuously acquire image data;
an adjustment module, configured to set an aperture parameter value, select image data from the continuously acquired image data and adjust an optical parameter of the selected image data according to the aperture parameter value;
a photometric module, configured to acquire an exposure parameter;
a time control module, configured to determine time within which the acquisition module continuously acquires the image data according to the exposure parameter and the aperture parameter value; and
a synthesis module, configured to synthesize the adjusted image data.

A photographing method for a mobile terminal includes the following steps that:
an aperture parameter value is set, and an exposure parameter is acquired;
time for continuously acquiring image data is determined according to the exposure parameter and the aperture parameter value, and the image data is continuously acquired within the determined time;
image data is selected from the continuously acquired image data, and an optical parameter of the selected image data is adjusted according to the aperture parameter value; and
the adjusted image data is synthesized.

A mobile terminal includes:
an acquisition module, configured to continuously acquire image data;
an adjustment module, configured to select image data from the continuously acquired image data, and adjust an optical parameter of the selected image data; and
a synthesis module, configured to synthesize the adjusted image data.

Preferably, the mobile terminal may further include:
a time control module, configured to determine time within which the acquisition module continuously acquires the image data.

Preferably, the mobile terminal may further include a photometric module, and the photometric module may be configured to acquire an exposure parameter; and
the adjustment module may further be configured to adjust luminance of the selected image data according to the exposure parameter and the time.

Preferably, exposure time of image data continuously acquired by the acquisition module may not all be the same as each other.

Preferably, the mobile terminal may further include:
a photometric module, configured to acquire an exposure parameter; and
a time control module, configured to determine time according to the exposure parameter, wherein the acquisition module continuously acquires the image data within the time.

Preferably, the photometric module may be configured to calculate a required exposure parameter according to current ambient light intensity, an International Standards Organization for photosensibility (ISO) or/and aperture size of the mobile terminal.

Preferably, the adjustment module may further be configured to: set an aperture parameter value, and adjust the optical parameter of the selected image data according to the aperture parameter value.

Preferably, the mobile terminal may further include:
a photometric module, configured to acquire an exposure parameter; and
a time control module, configured to determine time according to the exposure parameter and an aperture parameter value, wherein the acquisition module continuously acquires the image data within the time.

Preferably, the acquisition module may be configured to: adjust an acquisition speed in real time according to a residual space of a cache.

Preferably, the acquisition module may be configured to: determine whether the residual space of the cache reaches a preset value or not in real time, and in the case that the residual space of the cache reaches the preset value, adjust the acquisition speed to a preset speed.

A photographing method for a mobile terminal includes that:
image data is continuously acquired;
image data is selected from the continuously acquired image data, and an optical parameter of the selected image data is adjusted; and
the adjusted image data is synthesized.

Preferably, before the step that the image data is continuously acquired, the method may further include that:
time for continuously acquiring the image data is determined.

Preferably, the method may further include that: an exposure parameter is acquired; and
the step that the optical parameter of the selected image data is adjusted may further include that: luminance of the selected image data is adjusted according to the exposure parameter and the time.

Preferably, the method may further include that: an aperture parameter value is set; and
the step that the optical parameter of the selected image data is adjusted may further include that: the optical parameter of the selected image data is adjusted according to the aperture parameter value.

Preferably, the method may further include that: an exposure parameter is acquired; and
time for continuously acquiring the image data is determined according to the exposure parameter and an aperture parameter value.

Preferably, the step that the exposure parameter is acquired may include that: a required exposure parameter is calculated according to current ambient light intensity, an ISO or/and aperture size of the mobile terminal.

Preferably, the method may further include that: an aperture parameter value is set, and the optical parameter of the selected image data is adjusted according to the aperture parameter value.

Preferably, the method may further include that:
an exposure parameter is acquired; and
time within which an acquisition module continuously acquires the image data is determined according to the exposure parameter and an aperture parameter value.

By adopting the present disclosure, the optical parameter of the selected image data is adjusted, and the adjusted image data is synthesized, so that a photographing effect of an exposure mode with shutter priority, aperture priority or the like is achieved.

### BRIEF DESCRIPTION OF THE DRAWINGS

Fig. 1 is a diagram illustrating modules of a mobile terminal according to a first embodiment of the present disclosure.
Fig. 2 is a flowchart showing a photographing method for a mobile terminal according to a first embodiment of the present disclosure.
Fig. 3 is a diagram illustrating modules of a mobile terminal according to a second embodiment of the present disclosure.
Fig. 4 is a flowchart showing a photographing method for a mobile terminal according to a second embodiment of the present disclosure.
Fig. 5 is a diagram illustrating modules of a mobile terminal according to a third embodiment of the present disclosure.
Fig. 6 is a flowchart showing a photographing method for a mobile terminal according to a third embodiment of the present disclosure.

Achievement of a purpose, functional features and advantages of the present disclosure will be further described with reference to embodiments and the drawings.

### DETAILED DESCRIPTION

The present disclosure will be further described below with reference to the drawings and embodiments in detail. It should be understood that specific embodiments described herein are only intended to explain the present disclosure, rather than to limit the present disclosure.

### Embodiment 1

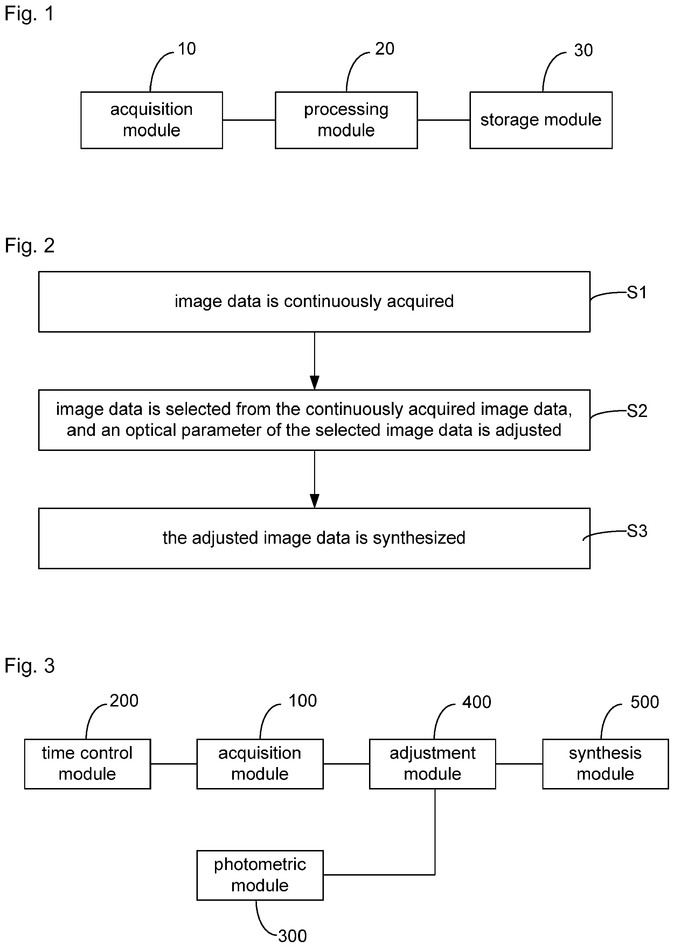

Fig. 1 is a diagram illustrating modules of a mobile terminal according to a first embodiment of the present disclosure.

A mobile terminal includes: an acquisition module 10, an adjustment module 20 and a synthesis module 30.

The acquisition module 10 is configured to continuously acquire image data.

Specifically, the condition that the acquisition module 10 is a camera is taken as an example for description. After starting photographing, the camera continuously acquires image data to a caching module. Preferably, an acquisition speed is adjusted in real time according to a residual space of the caching module.

After a user presses down a shutter button or triggers a virtual shutter button, photographing is started to continuously acquire the image data to the caching module. In an image data acquisition process, whether the residual space of the caching module reaches a preset value is determined in real time, and if YES, the acquisition speed is adjusted into a preset speed.

For example, when it is detected that the residual space of the caching module is over 50%, the image data is acquired at a highest speed; when it is detected that the residual space of the caching module is lower than 50%, the acquisition speed is lowered to a half of the current speed; and when the residual space of the caching module is recovered to be over 50%, the acquisition speed is recovered into the highest speed. The preset value and the preset speed may be set as multiple values to implement level-by-level progressive increase or progressive decrease according to a practical requirement. Therefore, not only may a processing capability of the mobile terminal be maximally utilized, but also data loss caused by data overflow due to the fact that the acquisition speed is excessively high may be prevented.

In some embodiments, not all of exposure time for image data continuously acquired by the acquisition module may be the same.

The adjustment module 20 is configured to select image data from the continuously acquired image data and adjust an optical parameter of the selected image data.

Specifically, when the image data is selected from the continuously acquired image data, the image data may be all or partially selected.

The optical parameter, adjusted by the adjustment module, of the selected image data includes luminance. For example, the luminance of the image data is modified by means of a software algorithm. Luminance adjustment is performed on all or part of the image data continuously acquired by the acquisition module to simulate an aperture control effect.

The synthesis module 30 is configured to synthesize the adjusted image data.

Specifically, the adjusted image data is synthesized by superimposition, coverage or in other manners. For example, a piece of image data is generated by synthesis.

If n pieces of image data are adjusted and Red, Green and Blue (RGB) or YUV information, acquired by the acquisition module, of first piece of image data is RGB1 or YUV1 (since YUV and RGB may be converted into each other, YUV is adopted for descriptions hereinafter in a unified manner), YUV information of the nth piece of image data is: YUVn=(1/m)*(YUV1+....+YUVn-1), wherein m is an aperture parameter value.

1/m represents a proportion of a set aperture size and an original aperture.

For example, if an original aperture size is f and the set aperture size is f0, then:
f0:f=1:m.

Optionally, the mobile terminal further includes a display module and a storage module. The display module is configured to preview the acquired image data, and the storage module is configured to store the acquired image data and the synthesized image data.

Correspondingly, Fig. 2 is a flowchart showing a photographing method for a mobile terminal according to a first embodiment of the present disclosure.

The first embodiment of the present disclosure provides a photographing method for a mobile terminal, which includes the following steps.

Step 1: image data is continuously acquired.

Specifically, the condition that an acquisition module is a camera is taken as an example for description. After starting photographing, the camera continuously acquires image data to a caching module. Preferably, an acquisition speed is adjusted in real time according to a residual space of the caching module.

After a user presses down a shutter button or triggers a virtual shutter button, photographing is started to continuously acquire the image data to the caching module. In an image data acquisition process, whether the residual space of the caching module reaches a preset value is determined in real time, and if YES, the acquisition speed is adjusted into a preset speed.

For example, when it is detected that the residual space of the caching module is over 50%, the image data is acquired at a highest speed; when it is detected that the residual space of the caching module is lower than 50%, the acquisition speed is lowered to a half of the current speed; and when the residual space of the caching module is recovered to be over 50%, the acquisition speed is recovered into the highest speed. The preset value and the preset speed may be set as multiple values to implement level-by-level progressive increase or progressive decrease according to a practical requirement. Therefore, not only may a processing capability of the mobile terminal be maximally utilized, but also data loss caused by data overflow due to the fact that the acquisition speed is excessively high may be prevented.

Step 2: image data is selected from the continuously acquired image data and an optical parameter of the selected image data is adjusted.

Specifically, when the image data is selected from the continuously acquired image data, the image data may be all or partially selected.

The optical parameter, adjusted by an adjustment module, of the selected image data includes luminance. For example, the luminance of the image data is modified by means of a software algorithm. Luminance adjustment is performed on all or part of the image data continuously acquired by the acquisition module to simulate an aperture control effect.

Step 3: the adjusted image data is synthesized.

Specifically, the adjusted image data is synthesized in a superimposition, coverage or other manners. For example, a piece of image data is generated by synthesis.

If n pieces of image data are adjusted and RGB or YUV information, acquired by the acquisition module, of first piece of image data is RGB1 or YUV1 (since YUV and RGB may be converted to each other, YUV is adopted for descriptions hereinafter in a unified manner), YUV information of the nth piece of image data is: YUVn=(1/m)*(YUV1 +....+YUVn-1), wherein m is an aperture parameter value.

1/m represents a proportion of a set aperture size and an original aperture.

For example, if an original aperture size is f and the set aperture size is f0, then:
f0:f=1:m.

### Embodiment 2

Fig. 3 is a diagram illustrating modules of a mobile terminal according to a second embodiment of the present disclosure.

A mobile terminal includes: an acquisition module 100, a time control module 200, a photometric module 300, an adjustment module and a synthesis module 500.

The acquisition module 100 is configured to continuously acquire image data.

Specifically, the condition that the acquisition module 100 is a camera is taken as an example for description. After starting photographing, the camera continuously acquires image data to a caching module. Preferably, an acquisition speed is adjusted in real time according to a residual space of the caching module.

After a user presses down a shutter button or triggers a virtual shutter button, photographing is started to continuously acquire the image data to the caching module. In an image data acquisition process, whether the residual space of the caching module reaches a preset value is determined in real time, and if YES, the acquisition speed is adjusted into a preset speed.

For example, when it is detected that the residual space of the caching module is over 50%, the image data is acquired at a highest speed; when it is detected that the residual space of the caching module is lower than 50%, the acquisition speed is lowered to a half of the current speed; and when the residual space of the caching module is recovered to be over 50%, the acquisition speed is recovered into the highest speed. The preset value and the preset speed may be set as multiple values to implement level-by-level progressive increase or progressive decrease according to a practical requirement. Therefore, not only may a processing capability of the mobile terminal be maximally utilized, but also data loss caused by data overflow due to the fact that the acquisition speed is excessively high may be prevented.

The time control module 200 is configured to determine time within which the acquisition module continuously acquires the image data. Specifically, the time determined by the time control module may be input by the user, or may be set previously in the mobile terminal.

The photometric module 300 is configured to acquire an exposure parameter.

Specifically, the exposure parameter is acquired through the photometric module 300. In a photographing process, the photometric module 300 calculates a required exposure parameter according to current ambient light intensity, an ISO or/and aperture size of the mobile terminal.

The adjustment module 400 is configured to select image data from the continuously acquired image data and adjust an optical parameter of the selected image data. Furthermore, the optical parameter, adjusted by the adjustment module 400, of the selected image data includes luminance, and the adjustment module is configured to adjust the optical parameter, such as the luminance, of the selected image data according to the exposure parameter and the time.

For example, the luminance of the image data is modified by means of a software algorithm. Luminance adjustment is performed on all or part of the image data continuously acquired by the acquisition module to simulate an aperture control effect.

In addition, when the image data is selected from the continuously acquired image data, the image data may be all or partially selected.

The synthesis module 500 is configured to synthesize the adjusted image data.

Specifically, the adjusted image data is synthesized by superimposition, coverage or in other manners. For example, a piece of image data is generated by synthesis.

If RGB or YUV information, acquired by the acquisition module, of first piece of image data is RGB1 or YUV1 (since YUV and RGB may be converted into each other, YUV is adopted for descriptions hereinafter in a unified manner), YUV information of the nth piece of image data is: YUVn=(1/m)*(YUV1+....+YUVn-1), wherein m is an aperture parameter value.

1/m represents a proportion of a set aperture size and an original aperture.

For example, if an original aperture size is f and the set aperture size is f0, then:
f0:f=1:m.

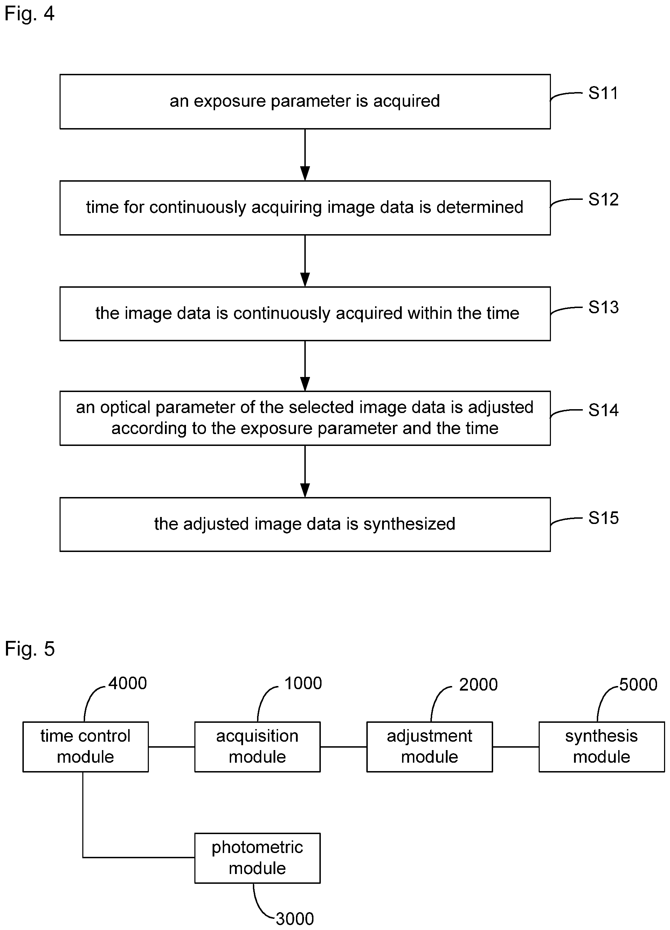

Correspondingly, Fig. 4 is a flowchart showing a photographing method for a mobile terminal according to a second embodiment of the present disclosure.

The second embodiment of the present disclosure provides a photographing method for a mobile terminal, which includes the following steps:
Step 11: an exposure parameter is acquired.

Specifically, the exposure parameter is acquired through a photometric module. In a photographing process, the photometric module calculates a required exposure parameter according to current ambient light intensity, an ISO or/and aperture size of the mobile terminal.

Step 12: time for continuously acquiring image data is determined.

Specifically, the time determined by a time control module may be input by a user, or may be set previously in the mobile terminal.

Step 13: the image data is continuously acquired within the time.

Specifically, the condition that an acquisition module is a camera is taken as an example for description. After starting photographing, the camera continuously acquires image data to a caching module. Preferably, an acquisition speed is adjusted in real time according to a residual space of the caching module.

After the user presses down a shutter button or triggers a virtual shutter button, photographing is started to continuously acquire the image data to the caching module. In an image data acquisition process, whether the residual space of the caching module reaches a preset value is determined in real time, and if YES, the acquisition speed is adjusted into a preset speed.

For example, when it is detected that the residual space of the caching module is over 50%, the image data is acquired at a highest speed; when it is detected that the residual space of the caching module is lower than 50%, the acquisition speed is lowered to a half of the current speed; and when the residual space of the caching module is recovered to be over 50%, the acquisition speed is recovered into the highest speed. The preset value and the preset speed may be set as multiple values to implement level-by-level progressive increase or progressive decrease according to a practical requirement. Therefore, not only may a processing capability of the mobile terminal be maximally utilized, but also data loss caused by data overflow due to the fact that the acquisition speed is excessively high may be prevented.

Step 14: an optical parameter of selected image data is adjusted according to the exposure parameter and the time.

The condition that the adjusted optical parameter is luminance is taken as an example for description.

For example, the luminance of the image data is modified by means of a software algorithm. Luminance adjustment is performed on all or part of the image data continuously acquired by the acquisition module to simulate an aperture control effect.

In addition, when the image data is selected from the continuously acquired image data, the image data may be all or partially selected.

Step 15: the adjusted image data is synthesized.

Specifically, the adjusted image data is synthesized by superimposition, coverage or in other manners. For example, a piece of image data is generated by synthesis.

If RGB or YUV information, acquired by the acquisition module, of first piece of image data is RGB1 or YUV1 (since YUV and RGB may be converted into each other, YUV is adopted for descriptions hereinafter in a unified manner), YUV information of the nth piece of image data is: YUVn=(1/m)*(YUV1+....+YUVn-1), wherein m is an aperture parameter value.

1/m represents a proportion of a set aperture size and an original aperture.

For example, if an original aperture size is f and the set aperture size is f0, then:
f0:f=1:m.

It is noted that there are no limits made to the order of performing Step 11 and Step 12, and there may be multiple possibilities.

### Embodiment 3

Fig. 5 is a diagram illustrating modules of a mobile terminal according to a third embodiment of the present disclosure.

A mobile terminal includes: an acquisition module 1000, an adjustment module 2000, a photometric module 3000, a time control module 4000 and a synthesis module 5000.

The acquisition module 1000 is configured to continuously acquire image data.

Specifically, the condition that the acquisition module is a camera is taken as an example for description. After starting photographing, the camera continuously acquires image data to a caching module. Preferably, an acquisition speed is adjusted in real time according to a residual space of the caching module.

After a user presses down a shutter button or triggers a virtual shutter button, photographing is started to continuously acquire the image data to the caching module. In an image data acquisition process, whether the residual space of the caching module reaches a preset value is determined in real time, and if YES, the acquisition speed is adjusted into a preset speed.

For example, when it is detected that the residual space of the caching module is over 50%, the image data is acquired at a highest speed; when it is detected that the residual space of the caching module is lower than 50%, the acquisition speed is lowered to a half of the current speed; and when the residual space of the caching module is recovered to be over 50%, the acquisition speed is recovered into the highest speed. The preset value and the preset speed may be set as multiple values to implement level-by-level progressive increase or progressive decrease according to a practical requirement. Therefore, not only may a processing capability of the mobile terminal be maximally utilized, but also data loss caused by data overflow due to the fact that the acquisition speed is excessively high may be prevented.

The adjustment module 2000 is configured to select image data from the continuously acquired image data, set an aperture parameter value and adjust an optical parameter of the selected image data according to the aperture parameter value. Furthermore, the optical parameter, adjusted by the adjustment module 2000, of the selected image data includes luminance, and the adjustment module is configured to adjust the luminance of the selected image data according to the aperture parameter value. It is noted that there are no limits made to the order of performing the two steps of selecting the image data from the continuously acquired image data and setting the aperture parameter value, that is, there may be multiple possibilities for the order of the two steps.

For example, the luminance of the image data is modified by means of a software algorithm. Luminance adjustment is performed on all or part of the image data continuously acquired by the acquisition module to simulate an aperture control effect.

In addition, when the image data is selected from the continuously acquired image data, the image data may be all or partially selected.

The photometric module 3000 is configured to acquire an exposure parameter.

Specifically, the exposure parameter is acquired through the photometric module. In a photographing process, the photometric module calculates a required exposure parameter according to current ambient light intensity, an ISO and aperture size of the mobile terminal.

The time control module 4000 is configured to determine time within which the acquisition module continuously acquires the image data according to the exposure parameter and the aperture parameter value.

The synthesis module 5000 is configured to synthesize the adjusted image data.

Specifically, the adjusted image data is synthesized by superimposition, coverage or inother manners. For example, a piece of image data is generated by synthesis.

If RGB or YUV information, acquired by the acquisition module, of first piece of image data is RGB1 or YUV1 (since YUV and RGB may be converted into each other, YUV is adopted for descriptions hereinafter in a unified manner), YUV information of the nth piece of image data is: YUVn=(1/m)*(YUV1+....+YUVn-1), wherein m is an aperture parameter value.

1/m represents a proportion of a set aperture size and an original aperture.

For example, if an original aperture size is f and the set aperture size is f0, then:
f0:f=1:m.

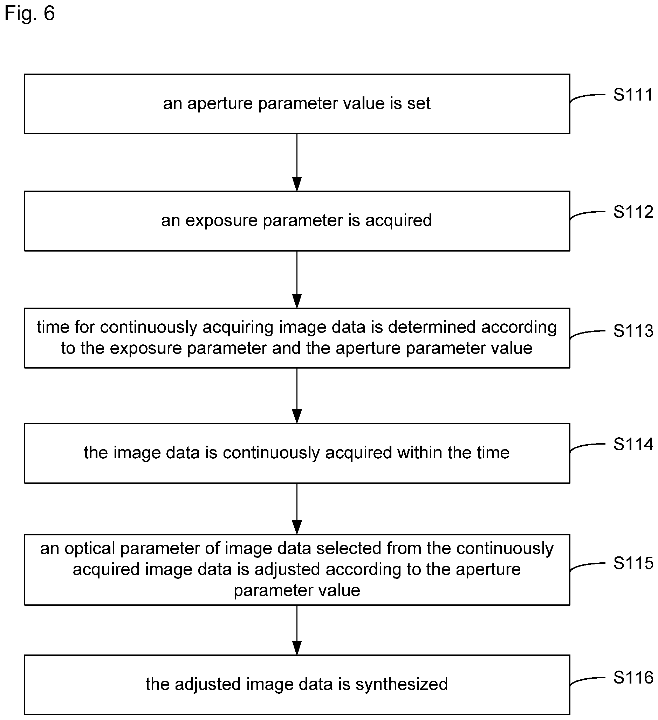

Correspondingly, Fig. 6 is a flowchart showing a photographing method for a mobile terminal according to a third embodiment of the present disclosure.

The third embodiment of the present disclosure provides a photographing method for a mobile terminal, which includes the following steps.

Step 111: an aperture parameter value is set.

Specifically, the aperture parameter value is set by manual input or built in the mobile terminal.

Step 112: an exposure parameter is acquired.

Specifically, the exposure parameter is acquired through a photometric module. In a photographing process, the photometric module calculates a required exposure parameter according to current ambient light intensity, an ISO and/or aperture size of the mobile terminal.

It is noted that there are no limits made to the order of performing Step 111 and Step 112, that is, one may be executed before the other is executed, or the two steps may be executed at the same time.

Step 113: time for continuously acquiring image data is determined according to the exposure parameter and the aperture parameter value.

For example, an aperture priority mode is selected, a new aperture (Step 111) is set, and is, for example, 1/2 of an original aperture, and then in order to obtain correct exposure, reasonable shutter time should be twice of the original one; and vice versa (the abovementioned embodiment 2).

Step 114: image data is continuously acquired within the time.

Specifically, the condition that an acquisition module is a camera is taken as an example for description. After starting photographing, the camera continuously acquires image data to a caching module. Preferably, an acquisition speed is adjusted in real time according to a residual space of the caching module.

After a user presses down a shutter button or triggers a virtual shutter button, photographing is started to continuously acquire the image data to the caching module. In an image data acquisition process, whether the residual space of the caching module reaches a preset value is determined in real time, and if YES, the acquisition speed is adjusted into a preset speed.

For example, when it is detected that the residual space of the caching module is over 50%, the image data is acquired at a highest speed; when it is detected that the residual space of the caching module is lower than 50%, the acquisition speed is lowered to a half of the current speed; and when the residual space of the caching module is recovered to be over 50%, the acquisition speed is recovered into the highest speed. The preset value and the preset speed may be set as multiple values to implement level-by-level progressive increase or progressive decrease according to a practical requirement. Therefore, not only may a processing capability of the mobile terminal be maximally utilized, but also data loss caused by data overflow due to the fact that the acquisition speed is excessively high may be prevented.

Step 115: an optical parameter of image data selected from the continuously acquired image data is adjusted according to the aperture parameter value.

For example, the optical parameter is luminance. The luminance of the image data is modified by means of a software algorithm. Luminance adjustment is performed on all or part of the image data continuously acquired by the acquisition module to simulate an aperture control effect.

In addition, when the image data is selected from the continuously acquired image data, the image data may be all or partially selected.

Step 116: the adjusted image data is synthesized.

Specifically, the adjusted image data is synthesized by superimposition, coverage or in other manners. For example, a piece of image data is generated by synthesis.

If RGB or YUV information, acquired by the acquisition module, of first piece of image data is RGB1 or YUV1 (since YUV and RGB may be converted into each other, YUV is adopted for descriptions hereinafter in a unified manner), YUV information of the nth piece of image data is: YUVn=(1/m)*(YUV1+....+YUVn-1), wherein m is an aperture parameter value.

In each of the abovementioned embodiments, the mobile terminal may be any electronic device capable of communicating with other equipment, including, but not limited to: a personal computer, handheld equipment, an electronic tablet, a Personal Digital Assistant (PDA), a mobile phone, a network appliance, a camera, a video camera, a smart phone, a network base station, a media player, navigation equipment, e-mail equipment, gaming equipment, an automatic information system (such as an entertainment system with a control panel) and a combination thereof.

By means of the present disclosure, the optical parameter of the selected image data is adjusted, and the adjusted image data is synthesized, so that a photographing effect of an exposure mode with shutter priority, aperture priority or the like is achieved.

The preferred embodiments of the present disclosure are described with reference to the drawings and are not intended to limit the scope of the present disclosure. Those skilled in the art may implement the present disclosure by adopting various equivalents without departing from the scope and substance of the present disclosure. For example, a characteristic of one embodiment may be adopted for the other embodiment to obtain another embodiment. Any modifications, equivalent replacements and improvements made by virtue of the technical concept of the present disclosure shall fall within the scope of protection of the present disclosure.

### INDUSTRIAL APPLICABILITY

According to the mobile terminal and photographing method therefor provided by the present disclosure, the optical parameter of the selected image data is adjusted, and the adjusted image data is synthesized, so that the mobile terminal may achieve the photographing effect of the exposure mode with shutter priority, aperture priority or the like during photographing, and user experiences are improved.

## Claims

1. A mobile terminal, comprising:
an acquisition module, configured to continuously acquire image data;
an adjustment module, configured to set an aperture parameter value, select image data from the continuously acquired image data and adjust the selected image data or parameters of a processing algorithm to achieve adjustment of an optical parameter according to the aperture parameter value;
a photometric module, configured to acquire an exposure parameter;
a time control module, configured to determine time within which the acquisition module continuously acquires the image data according to the exposure parameter and the aperture parameter value; and
a synthesis module, configured to synthesize the adjusted image data.

2. A photographing method for a mobile terminal, comprising:
setting an aperture parameter value, and acquiring an exposure parameter;
determining time for continuously acquiring image data according to the exposure parameter and the aperture parameter value, and continuously acquiring the image data within the determined time;
selecting image data from the continuously acquired image data, and adjusting the selected image data or parameters of a processing algorithm to achieve adjustment of an optical parameter according to the aperture parameter value; and
synthesizing the adjusted image data.

3. A mobile terminal, comprising:
an acquisition module, configured to continuously acquire image data;
an adjustment module, configured to select image data from the continuously acquired image data, and adjust the selected image data or parameters of a processing algorithm to achieve adjustment of an optical parameter; and
a synthesis module, configured to synthesize the adjusted image data.

4. The mobile terminal according to claim 3, further comprising:
a time control module, configured to determine time within which the acquisition module continuously acquires the image data.

5. The mobile terminal according to claim 4, further comprising: a photometric module, configured to acquire an exposure parameter,
wherein the adjustment module is further configured to adjust luminance of the selected image data according to the exposure parameter and the time.

6. The mobile terminal according to claim 3, wherein exposure time of image data continuously acquired by the acquisition module is not all the same as each other.

7. The mobile terminal according to claim 3, further comprising:
a photometric module, configured to acquire an exposure parameter; and
a time control module, configured to determine time according to the exposure parameter, wherein the acquisition module continuously acquires the image data within the time.

8. The mobile terminal according to claim 7, wherein the photometric module is configured to calculate a required exposure parameter according to current ambient light intensity, an International Standards Organization for photosensibility (ISO) or/and aperture size of the mobile terminal.

9. The mobile terminal according to claim 3, wherein the adjustment module is further configured to set an aperture parameter value, and adjust the selected image data or parameters of the processing algorithm to achieve adjustment of the optical parameter according to the aperture parameter value.

10. The mobile terminal according to claim 9, further comprising:
a photometric module, configured to acquire an exposure parameter; and
a time control module, configured to determine time according to the exposure parameter and an aperture parameter value, wherein the acquisition module continuously acquires the image data within the time.

11. The mobile terminal according to claim 3, wherein the acquisition module is configured to adjust an acquisition speed in real time according to a residual space of a cache.

12. The mobile terminal according to claim 11, wherein the acquisition module is configured to determine whether the residual space of the cache reaches a preset value or not in real time, and in the case that the residual space of the cache reaches the preset value, adjust the acquisition speed to a preset speed.

13. A photographing method for a mobile terminal, comprising:
continuously acquiring image data;
selecting image data from the continuously acquired image data, and adjusting the selected image data or parameters of a processing algorithm to achieve adjustment of an optical parameter; and
synthesizing the adjusted image data.

14. The photographing method according to claim 13, before the step of continuously acquiring the image data, further comprising:
determining time for continuously acquiring the image data.

15. The photographing method according to claim 14, further comprising: acquiring an exposure parameter,
wherein the step of adjusting the optical parameter of the selected image data further comprises: adjusting luminance of the selected image data according to the exposure parameter and the time.

16. The photographing method according to claim 13, further comprising: setting an aperture parameter value,
wherein the step of adjusting the optical parameter of the selected image data further comprises: adjusting the selected image data or parameters of the processing algorithm to achieve adjustment of the optical parameter according to the aperture parameter value.

17. The photographing method according to claim 16, further comprising:
acquiring an exposure parameter; and
determining time for continuously acquiring the image data according to the exposure parameter and an aperture parameter value.

18. The photographing method according to claim 17, wherein the step of acquiring the exposure parameter comprises: calculating a required exposure parameter according to current ambient light intensity, an International Standards Organization for photosensibility (ISO) or/and aperture size of the mobile terminal.

19. The photographing method according to claim 13, further comprising:
setting an aperture parameter value; and
adjusting the selected image data or parameters of the processing algorithm to achieve adjustment of the optical parameter according to the aperture parameter value.

20. The photographing method according to claim 19, further comprising:
acquiring an exposure parameter; and
determining time according to the exposure parameter and an aperture parameter value, wherein an acquisition module continuously acquires the image data within the time.
